# EUROPÄISCHE PATENTSCHRIFT

(11) **EP 3 011 325 B1**
(45) Veröffentlichungstag und Bekanntmachung des Hinweises auf die Patenterteilung: **23.06.2021**
(21) Anmeldenummer: 14710861.7
(22) Anmeldetag: 13.03.2014
(51) Int. Cl.: G01N 27/406, G01N 27/407

(54) **SENSORELEMENT MIT LEITERBAHN UND DURCHFÜHRUNG**
SENSOR ELEMENT WITH CONDUCTOR TRACK AND LEAD-THROUGH
ÉLÉMENT CAPTEUR DOTÉ D'UNE PISTE CONDUCTRICE ET D'UNE TRAVERSÉE

(30) Priorität: 21.06.2013 DE 102013211796
(43) Veröffentlichungstag der Anmeldung: 27.04.2016
(73) Patentinhaber: Robert Bosch GmbH, 70442 Stuttgart (DE)
(72) Erfinder: JUESTEL, Thomas, 96114 Hirschaid-Juliushof (DE); SCHNEIDER, Jens, 71229 Leonberg (DE); BUSE, Frank, 70437 Stuttgart (DE); ROTTMANN, Andreas, 96188 Stettfeld (DE)
(86) Internationale Anmeldenummer: PCT/EP2014/055007
(87) Internationale Veröffentlichungsnummer: WO 2014/202245

(56) Entgegenhaltungen:
- WO-A1-2005/059535
- DE-A1- 19 700 700
- DE-A1-102004 044 328
- DE-A1-102006 055 797
- DE-A1-102012 214 133
- US-A1- 2007 108 047

## Beschreibung

### Stand der Technik

Die Erfindung geht aus von bekannten Sensorelementen, welche beispielsweise als Abgassensoren eingesetzt werden, insbesondere als Lambdasonden, die in Kraftfahrzeugen eine sehr große Verbreitung gefunden haben. Auch auf andere Arten von Sensorelementen, ist die Erfindung jedoch anwendbar, zum Beispiel auf Sensoren zum Nachweis anderer gasförmiger Bestandteile von Abgasen und auf Partikelsensoren oder dergleichen.

Die Erfindung betrifft insbesondere ein gesintertes oder sinterbares keramisches Sensorelement das beispielsweise durch Zusammenbringen, insbesondere Aufeinanderstapeln, einzelner, gegebenenfalls bedruckter, keramischer Grünfolien hergestellt ist.

Das Sensorelement umfasst insbesondere mindestens ein elektrisches, elektrochemisches und/oder elektronisches Funktionselement in einem ersten, in der Regel dem Abgas zugewandten Endbereich des Sensorelements. Eine elektrische Versorgbarkeit des Sensorelements ist vorliegend durch eine Kontaktfläche auf der Außenfläche des Sensorelements in einem zweiten, in der Regel dem Abgas abgewandten, Bereich vorgesehen.

Eine elektrische Versorgbarkeit des Sensorelements ist vorliegend durch eine elektrische Verbindung des Funktionselements mit der Kontaktfläche, die eine im wesentlichen in Längsrichtung des Sensorelements im Inneren des Sensorelements verlaufende Leiterbahn und eine Durchführung aufweist, die im wesentlichen senkrecht zur Längsrichtung des Sensorelements, insbesondere in Hochrichtung, verläuft.

Derartige Sensorelemente sind beispielsweise aus den DE 10 2006 055 797 A1, DE 10 2004 044328 A1 und US 2007108047 A1 bekannt.

Von der elektrischen Verbindung ist im Betrieb und bei der Herstellung des Sensorelements eine hohe Temperaturbeständigkeit und chemische Beständigkeit zu fordern. Verbreitet kommen daher Edelmetalle, wie beispielsweise Platin oder dergleichen, zum Einsatz. Da solche Edelmetalle vergleichsweise teuer sind, besteht allgemein das Bestreben, die Menge des eingesetzten Materials hierbei nach Möglichkeit zu verkleinern.

Eine derartige Miniaturisierung der elektrischen Verbindung erfährt eine Limitierung dadurch, dass bei gegebenem spezifischem Widerstand der Gesamtwiderstand umso größer ist, je geringer die jeweiligen Leitungsquerschnitte sind. Resultierende Spannungs- bzw. Leistungsabfälle und/oder Signalverfälschungen sind nur innerhalb vorgegebener Grenzen tolerierbar.

Insbesondere ist eine derartige Grenze des Gesamtwiderstands dieser elektrischen Verbindung des Funktionselements, insbesondere eines Heizwiderstandes, mit der Kontaktfläche im Bereich von 1 bis 4 Ohm bei 20°C zu sehen, insbesondere im Bereich von 2 bis 3 Ohm bei 20°C.

### Vorteile der Erfindung

Erfindungsgemäße Sensorelemente mit den Merkmalen des Anspruchs 1 oder mit den Merkmalen des Anspruchs 2 haben hingegen den Vorteil, dass die Menge des eingesetzten Materials, zum Beispiel Edelmetalls, das zur elektrischen Verbindung des Funktionselements mit der Kontaktfläche eingesetzt wird, minimierbar ist, ohne dass ein vergebbarer Gesamtwiderstand der elektrischen Verbindung überschritten wird.

Der Erfindung liegt zum Ersten die Betrachtung zu Grunde, dass es sich bei der Leiterbahn und bei der Durchführung um zwei elektrisch hintereinander geschaltete Abschnitte der elektrischen Verbindung handelt. Der Gesamtwiderstand der elektrischen Verbindung ergibt sich also additiv aus den Einzelwiderständen. Zum Zweiten liegt der Erfindung die Betrachtung zugrunde, dass bei Verkleinerung der Querschnitte der leitenden Strukturen deren elektrischer Widerstand etwa invers proportional zu der eingesetzten Materialmenge ist.

In der Konsequenz ist eine gleichzeitige Optimierung von Gesamtwiderstand der elektrischen Verbindung und der für die elektrische Verbindung benötigten Materialmenge als gegeben erkannt worden, wenn der elektrische Widerstand der Leiterbahn und der elektrische Widerstand der Durchführung zueinander in einem Verhältnis stehen, das nicht größer als 3 und nicht kleiner als 1/3 ist.

Bei einem anderen Verhältnis wäre die insgesamt bzw. für den Abschnitt geringeren Widerstands benötigte Materialmenge unverhältnismäßig erhöht, ohne dass der Gesamtwiderstand wesentlich reduziert wäre.

Insofern der spezifische Widerstand der verwendeten Materialien temperaturabhängig ist, ist insbesondere auf Temperaturverteilungen abzustellen, die im Betrieb des Sensors auftreten bzw. typischerweise auftreten können. Neben einer homogenen Temperaturverteilung, zum Beispiel 20°C, die beispielsweise den Zustand bei Inbetriebnahme des Sensors darstellt, ist die Erfindung alternativ oder zusätzlich auch hinsichtlich Temperaturverteilungen realisierbar, die inhomogen sind. Beispielsweise können gleichmäßige Temperaturanstiege in Längsrichtung von 750°C oder sogar 1100°C im Bereich des Funktionselements und 200°C, 300°C oder sogar 400°C im Bereich der Durchführung in den daraus entstehenden Kombinationen jeweils zugrunde gelegt werden. Solche Temperaturverteilungen liegen beispielsweise am vollständig aufgeheizten Sensor, zum Beispiel im Dauerbetrieb, vor.

Die elektrischen Widerstände der Leiterbahnen und der Durchführungen, auch bei unterschiedlichen Temperaturen und Temperaturverteilungen, sind dem Fachmann, beispielsweise durch Messung, ohne weiteres zugänglich. Auch vermag er gezielte Anpassungen der Widerstände, beispielsweise durch Modifikationen der Leitungsquerschnitte, ohne weiteres vorzunehmen.

Insbesondere bezieht sich die Erfindung auf ein Sensorelement, bei dem eine Miniaturisierung einer elektrischen Verbindung des Funktionselements, insbesondere eines Heizwiderstandes, mit einer Kontaktfläche bereits erfolgt ist. Der elektrische Widerstand der elektrischen Verbindung des Funktionselements, insbesondere des Heizwiderstandes, mit der Kontaktfläche liegt hierbei im Bereich von 1 bis 4 Ohm bei 20°C, insbesondere im Bereich von 2 bis 3 Ohm bei 20°C.

Die Begriffe "Längsrichtung", "Querrichtung" und "Hochrichtung" werden im Rahmen dieser Anmeldung grundsätzlich lediglich im Sinne eines rechtwinkligen Bezugssystems verwendet. Insbesondere kann es sich jedoch überdies um Richtungen handeln, die durch das Sensorelement ausgezeichnet sind, beispielsweise kann bei einem insbesondere quaderförmigen Sensorelement die Längsrichtung die Richtung sein, in die die längsten Seitenkanten des Sensorelements weisen, die Hochrichtung die Richtung sein, in die die kürzesten Seitenkanten des Sensorelements weisen und/oder die Querrichtung die Richtung sein, in die die Seitenkanten des Sensorelements weisen, die eine mittlere Länge aufweisen. Beispielsweise kann bei einem stäbchenförmigen Sensorelement die Längsrichtung in Richtung einer Achse weisen, um die das stäbchenförmige Sensorelement rotationssymmetrisch bzw. im Wesentlichen rotationssymmetrisch ist.

Wo auf eine Richtung nur im Wesentlichen Bezug genommen wird, kommen neben der Richtung im engen Sinn auch Richtungen in Betracht, die von dieser Richtung geringfügig abweichen, zum Beispiel um nicht mehr als 15° und/oder Richtungen, die zu dieser Richtung zumindest nicht orthogonal sind. Eine Richtung ist durch eine Struktur zusätzlich auch dann im Wesentlichen realisiert, wenn die betreffende Struktur nur in einem kleinen Teilbereich, der zum Beispiel nicht mehr als 10% der Struktur umfasst, abgeweicht.

Unter "Länge des Sensorelements" wird die Erstreckung des Sensorelements in Längsrichtung, unter "Breite des Sensorelements" wird die Erstreckung des Sensorelements in Querrichtung und unter "Höhe des Sensorelements" wird die Erstreckung des Sensorelements in Hochrichtung im Rahmen dieser Anmeldung verstanden. Diese Richtung ist auch für die Aufsicht auf das Sensorelement maßgeblich.

Unter dem Begriff "Endbereich des Sensorelements" wird mit Bezug auf eine Längsrichtung im Rahmen dieser Anmeldung grundsätzlich lediglich ein zusammenhängender Teilbereich des Sensorelements verstanden, der das betreffende Ende des Sensors umfasst und nicht mehr als 50% der Länge des Sensorelements ausmacht. Insofern überschneiden sich ein Endbereich und ein gegenüberliegender Endbereich beispielsweise lediglich in einer Fläche. Etwas eingeschränkter kann ein Endbereich des Sensorelements insbesondere auch als ein zusammenhängender Teilbereich des Sensorelements verstanden werden, der das betreffende Ende des Sensors umfasst und nicht mehr als ein Drittel oder sogar nicht mehr als ein Viertel der Länge des Sensorelements ausmacht.

Der Begriff "Funktionselement" ist vorliegend grundsätzlich nicht eng auszulegen. Beispielsweise kann es sich um eine mit dem Außenraum des Sensorelements kommunizierende Edelmetallelektrode oder Cermetelektrode handeln und/oder um einen elektrischen Widerstandheizer, der insbesondere einen elektrischen Widerstand von maximal 30 Ohm bei 20°C aufweist, und/oder um dergleichen.

Im Fall des Widerstandheizers als Funktionselement können zwei elektrische Verbindungen der vorliegend beschriebenen Ausführungsformen nebeneinanderliegend, insbesondere spiegelsymmetrisch vorgehen sein.

Vorteilhafte Ausprägungen der Erfindung sehen vor, dass das Verhältnis zwischen elektrischem Widerstand der Leiterbahn und dem elektrischem Widerstand der Durchführung noch stärker im Bereich von 1 eingeschränkt ist. Der elektrische Widerstand der Leiterbahn und der elektrische Widerstand der Durchführung sind dann gleich oder zumindest etwa gleich, beispielsweise mit einem Verhältnis im Bereich von 2 bis 1/2 oder im Bereich von 3/2 bis 2/3 oder im Bereich von 110% bis 90%.

Eine Weiterbildung der Erfindung, die insbesondere fertigungstechnische Vorteile hat, ist dadurch gegeben durch die Leiterbahn an ihrem dem Endbereich des Sensorelements abgewandten Ende seitlich abgewinkelt ist, wobei die Leiterbahn insbesondere in Querrichtung des Sensorelements außermittig verläuft und in ihrem dem Endbereich (201) des Sensorelements abgewandten Ende zur Außenseite des Sensorelements abgewinkelt ist. Auch können zwei derartiger Leiterbahnen vorgesehen sein, die gegenüberliegend, insbesondere symmetrisch, insbesondere in Querrichtung des Sensorelements außermittig angeordnet sind und in ihrem dem Endbereich des Sensorelements abgewandten Ende zur jeweiligen Außenseite des Sensorelements abgewinkelt sind. Vorteil dieser Ausführungsformen ist, dass die Leiterbahn in Querrichtung vergleichsweise zentral geführt werden kann, in einem Bereich des Sensorelements, in dem sie besonders fertigungssicher herstellbar sind. Die Durchführungen hingegen dürfen einen gewissen Mindestabstand zueinander nicht unterschreiten, da andernfalls die Bruchfestigkeit des Sensorelements insbesondere herabgesetzt wäre. Insgesamt kann Materialeinsatz und Funktionalität so weiter optimiert werden.

In besonderen Ausführungen der Erfindung besteht die Durchführung aus einer leitfähigen Beschichtung der radialen Wand eines Durchkontaktierloches des Sensorelements oder einer leitfähigen Füllung eines Durchkontaktierloches des Sensorelements.

Zusätzlich oder alternativ kann die Leiterbahn eine Zuleitung und einen Kragen umfassen, wobei die Zuleitung oder ein abgasabgewandter Endbereich der Zuleitung insbesondere eine konstante oder eine im wesentlichen konstante Zuleitungsbreite B aufweist und von dem Funktionselement in den Bereich der Durchführung führt, und der Kragen in Aufsicht auf das Sensorelement insbesondere kreisringförmig um das Durchkontaktierloch herum angeordnet ist und die elektrische Verbindung zwischen Durchführung und Zuleitung bewirkt, wobei der Kreisring eine Kreisringbreite b, gemessen radial in Aufsicht auf das Durchkontaktierloch, aufweist.

Gemäß Anspruch 1 ist das Funktionselement ein elektrischer Widerstandheizer ist, der insbesondere einen elektrischen Widerstand von maximal 30 Ohm bei 20°C aufweist. In diesem Fall ist die elektrische Verbindung im Betrieb Leiter erheblicher Ströme. Um unerwünschte Verluste bzw. Abwärme zu vermeiden, ist eine ausreichende Dimensionierung insbesondere der Zuleitung der Leiterbahn, die dem Widerstandheizer unmittelbar benachbart ist, vorzusehen. Der Bereich des Kragens kann hingegen sparsamer ausgestaltet werden. Als Ergebnis einer Optimierung ist gemäß Anspruch 1 vorgesehen, dass sich ein Breitenverhältnis, Kreisringbreite durch Zuleitungsbreite im Bereich von 0,1 bis 0,4, bevorzugt im Bereich 0,22 bis 0,32 liegt. Insgesamt kann Materialeinsatz und Funktionalität so weiter optimiert werden.

Insbesondere kann der Durchmesser des Durchkontaktierlochs zuzüglich zweimal der Kreisringbreite identisch oder etwa identisch ist mit der Zuleitungsbreite. Die Leiterbahn ist dann an ihrem Ende im Bereich der Durchführung durch den Kragen nicht verdickt, was sich Material sparend auswirkt, ohne nennenswerte funktionale Nachteile zu verursachen.

Insbesondere kann bei einem gesinterten Sensorelement die Zuleitungsbreite B im Bereich von 0,72 bis 1,12 mm liegen und/oder die Kreisringbreite b im Bereich von 0,2 bis 0,28 mm liegen und/oder der Durchmesser des Durchkontaktierlochs D im Bereich von 0,4 bis 0,56mm liegen. Bei ungesinterten Sensorelementen sind Maße anzusetzen, die jeweils 25% größer als die für gesinterte Sensorelemente angegeben sind.

Gemäß Anspruch 2 ist das Funktionselement eine flächig ausgebildete Cermet-Elektrode, die insbesondere mit dem Außenraum des Sensorelements kommuniziert.

In diesem Fall ist die elektrische Verbindung im Betrieb nur von geringen Strömen durchflossen. Um Material einzusparen kann Zuleitung der Leiterbahn mit vergleichsweise geringer Breite realisiert werden. Der Bereich des Kragens und der Durchführung kann hingegen nicht gleichermaßen skaliert werden, da andernfalls eine sichere Kontaktierung nicht mehr unter allen Umständen fertigungstechnisch realisierbar wäre. Gemäß Anspruch 2 ist vorgesehen, dass ein Breitenverhältnis, Kreisringbreite durch Zuleitungsbreite im Bereich von 0,6 bis 1,08 bevorzugt im Bereich 0,70 bis 0,90 liegt.

Insgesamt kann Materialeinsatz und Funktionalität so weiter optimiert werden.

Insbesondere kann bei einem gesinterten Sensorelement die Zuleitungsbreite B im Bereich von 0,30 bis 0,6 mm liegen und/oder die Kreisringbreite b im Bereich von 0,22 bis 0,36 mm liegen und/oder der Durchmesser des Durchkontaktierlochs D im Bereich von 0,4 bis 0,56mm liegen. Bei ungesinterten Sensorelementen sind Maße anzusetzen, die jeweils 25% größer als die für gesinterte Sensorelemente angegeben sind.

Im Zusammenhang mit der vorliegenden Erfindung kann eine spezifische Materialwahl für Leiterbahnen, Zuleitungen, Durchführungen und Kontaktflächen weiterhin zielführend sein. Grundsätzlich sind hierbei Materialien mit einem Edelmetallanteil von 83 Gew.-% oder mehr bevorzugt, sodass vorgegebene ohmsche Widerstände mit minimiertem Edelmetalleinsatz erreicht werden können. Für zumindest eine Zuleitung zu der Heizvorrichtung sind sogar Edelmetallanteile von 95 Gew.-% oder mehr, zum Beispiel 98 Gew.-% bevorzugt. Ein Anteil von mindestens 1 Gew.-% Al2O3, besser sogar mindestens 1,5 Gew% Al2O3, bevorzugt maximal 2,5 Gew% Al2O3, hat sich zur präzisen Einstellbarkeit des elektrischen Widerstands dieser Strukturen als günstig herausgestellt. Zumindest eine Zuleitung zu der Heizvorrichtung kann mit der Heizvorrichtung einstückig und aus dem gleichen Material ausgestaltet sein.

Zusätzlich oder alternativ ist für die Zuleitung zu der Cermetelektrode und/oder für zumindest eine Kontaktfläche ein geringerer Edelmetallanteil als für die zumindest eine Zuleitung zu der Heizvorrichtung vorgesehen, bevorzugt zum Beispiel 83 Gew.-% bis 87 Gew.-%, wobei insbesondere in der Zuleitung zu der Cermetelektrode ein Anteil an ZrO2 und Y2O3 von zusammen 12 Gew.-% bis 16 Gew.-% vorgesehen ist. Vorteil ist, dass die Zuleitung zu der Cermetelektrode zusammen mit der Cermetelektrode in einem Prozessschritt und aus dem gleichen Material hergestellt werden kann. Auch für die Zuleitung zu der Cermetelektrode bzw. für die Cermetelektrode ist ein Al2O3-Anteil, bevorzugt 0,2 Gew.-% bis 1 Gew.-% vorteilhaft.

Zusätzlich oder alternativ ist für zumindest eine Durchführung ein geringerer Edelmetallanteil als für die zumindest eine Zuleitung zu der Heizvorrichtung vorgesehen, bevorzugt zum Beispiel 83 Gew.-% bis 87 Gew.-%, wobei in der Durchführung ein Anteil an ZrO2 und Y2O3 von zusammen 3 Gew.-% bis 8 Gew.-% und zusätzlich ein Anteil von Nb2O5 von 6 Gew.-% bis 12 Gew.-% vorgesehen ist. Vorteil ist, dass die Durchführungen im Fertigungsprozess besser handhabbar sind. Insbesondere weisen entsprechende Pasten bessere rheologische Eigenschaften auf und ermöglichen eine bessere keramische Anbindung der Durchführungen innerhalb der Sensorelemente. Im Zusammenhang mit Sensorelementen, die überwiegend aus YSZ bestehen, bildet sich so überdies in den Randbereichen der Durchführungen eine verminderte Sauerstoffionenleitfähigkeit aus, was die Funktionalität der Sensorelemente verbessert.

Die oben genannten Edelmetallanteile können insbesondere aus Platin bestehen. Alternativ, insbesondere in Bezug auf zumindest eine Durchführung, können zur Stabilisierung der Metallphase Anteile, bevorzugt 0,2 Gew.-% bis 0,8 Gew.-% bezogen auf die Gesamtzusammensetzung der Materialien, aus Rhodium bestehen und/oder Anteile, bevorzugt 0,2 Gew.-% bis 1 Gew.-% bezogen auf die Gesamtzusammensetzung der Materialien, aus Palladium bestehen.

Weitere Edelmetallanteile können stets vorgesehen sein.

### Zeichnung

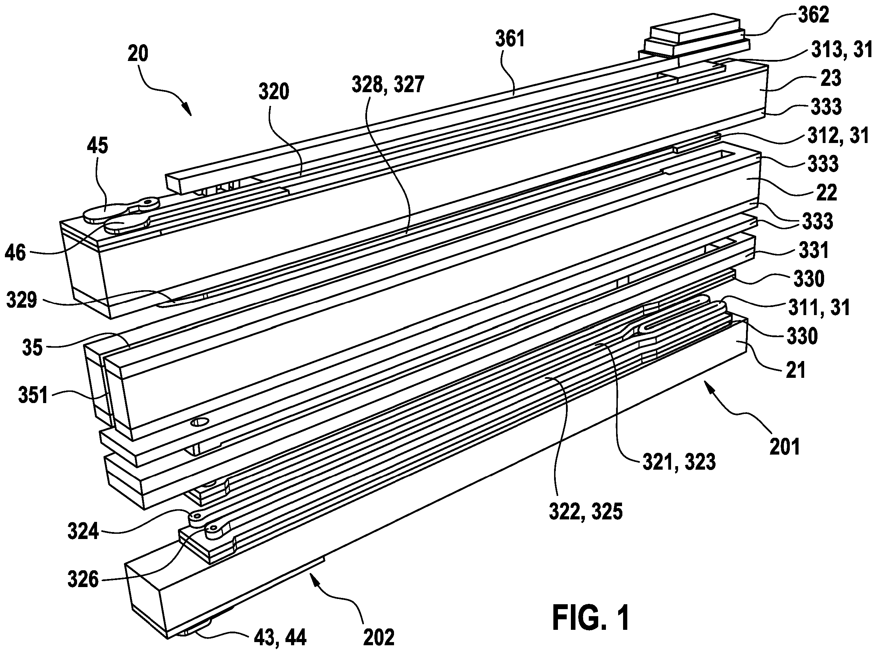

Die Figur 1 zeigt in Explosionsdarstellung perspektivisch und schematisch ein erfindungsgemäßes Sensorelement
Die weiteren Figuren zeigen vergrößerte Detailansichten

### Beschreibung des Ausführungsbeispiels

Figur 1 zeigt als ein Ausführungsbeispiel der Erfindung eine Gesamtansicht eines Sensorelements 20, das in einem Gehäuse eines Gasmessfühlers (nicht gezeichnet) angeordnet werden kann, der zur Bestimmung der Sauerstoffkonzentration in einem Abgas eines Verbrennungsmotors (nicht gezeichnet) dient. Mit entsprechenden Funktionselementen versehen ist die Erfindung selbstverständlich auch auf Sensorelemente für andere Sensoren, beispielsweise Sensoren zur Partikelmessung geeignet.

Das Sensorelement erstreckt sich in der Figur 1 in Längsrichtung von links nach rechts, wobei ein erster Endbereich 201 des Sensorelements 20 rechts und ein zweiter Endbereich 202 des Sensorelements 20 links abgebildet ist. Im bestimmungsgemäßen Verbau und Betrieb ist der erste Endbereich 201 des Sensorelements 20 einem Abgas zugewandt und der zweite Endbereich 202 des Sensorelements 20 dem Abgas abgewandt.

Ferner erstreckt sich in der Figur 1 das Sensorelement 20 in Querrichtung von vorne nach hinten und in Hochrichtung von unten nach oben.

Das Sensorelement 20 ist aus bedruckten keramischen Schichten aufgebaut, die in diesem Beispiel als eine erste, zweite und eine dritte Festelektrolytfolie 21, 22, 23 ausgebildet sind und Yttriumoxid stabilisiertes Zirkonoxid (YSZ) enthalten. Die Festelektrolytfolien 21, 22, 23 weisen im Beispiel vor einem Sintervorgang eine Länge von 72mm, eine Breite von 5mm und eine Höhe von 540µm auf. Folien eines gesinterten Sensorelements 20 weisen um 20% verminderte Kantenlängen auf.

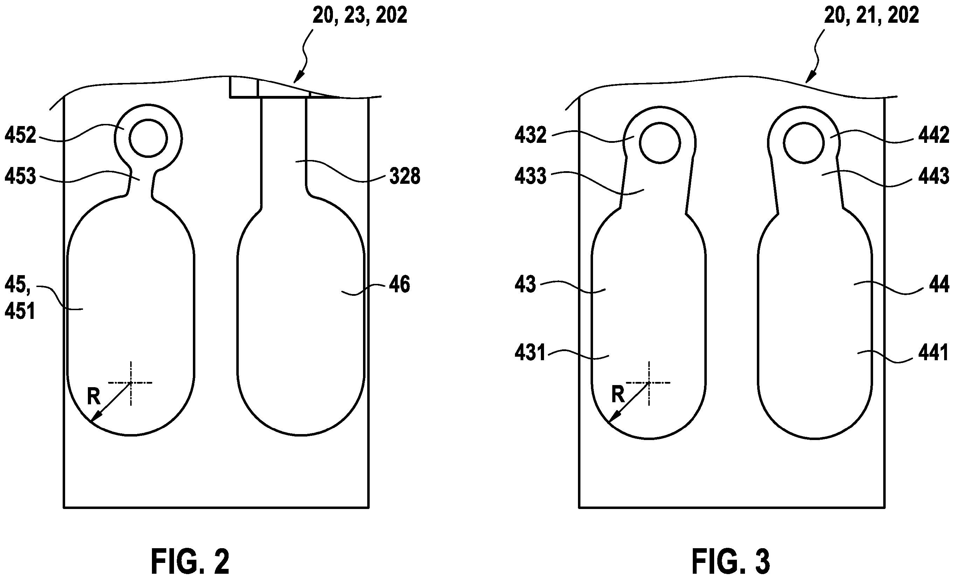

Die erste Festelektrolytfolie 21 ist auf ihrer aus Sicht des Sensorelements 20 nach außen weisenden Großfläche, in Figur 1 unten, im zweiten Endbereich 202 des Sensorelements 20 mit einer Kontaktfläche 43 und einer weiteren Kontaktfläche 44 versehen, hier bedruckt; siehe auch Figur 3.

Die erste Festelektrolytfolie 21 ist auf ihrer aus Sicht des Sensorelements 20 nach innen weisenden Großfläche, in Figur 1 oben, im ersten Endbereich 201 des Sensorelements 20 mit einer mäanderförmigen Heizvorrichtung 311 als ein Funktionselement 31, das der Beheizung des ersten Endbereichs 201 des Sensorelements 20 dient, versehen. In Fortsetzung der mäanderförmigen Heizvorrichtung 311 ist an deren Enden jeweils eine Leiterbahn 321, 322 angeschlossen, wobei der Übergang von Heizvorrichtung 311 zu Leiterbahn 321, 322 durch eine Zunahme der Strukturbreite und/oder -höhe bzw. eine Abnahme des elektrischen Widerstandes pro Länge gekennzeichnet ist.

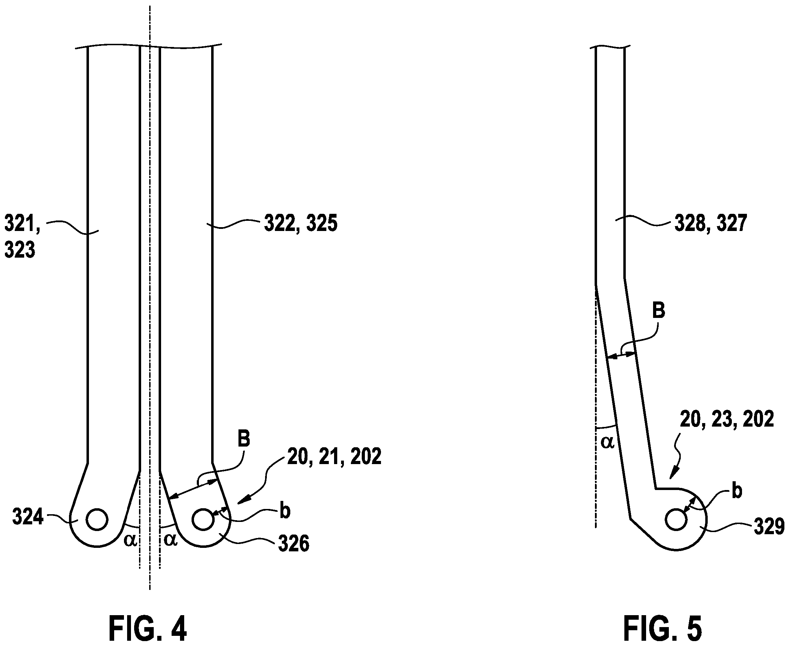

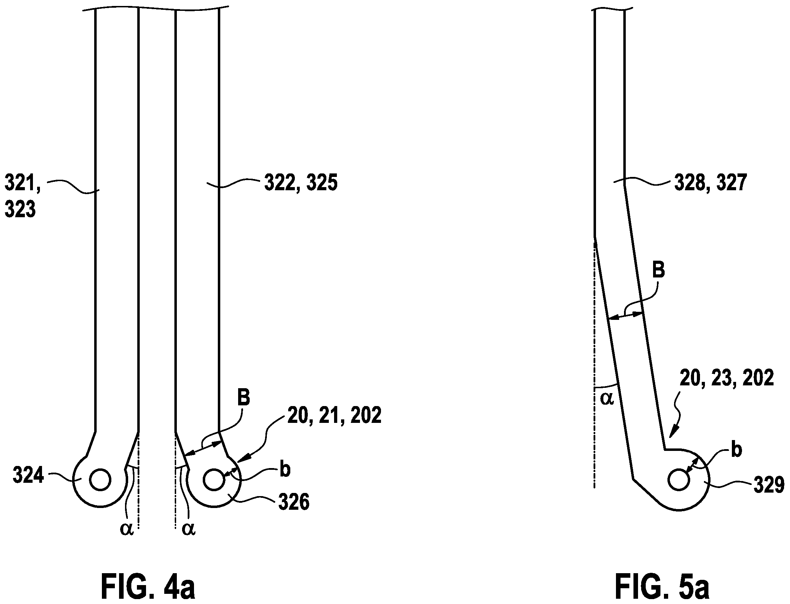

Die Leiterbahnen 321, 322 weisen abgasseitig einen als Zuleitung 323, 325 bezeichneten Abschnitt auf, der vorliegend eine konstante Breite hat. Die Leiterbahnen 321, 322 weisen ferner abgasabgewandt einen als Kragen 324, 326 bezeichneten Abschnitt, der vorliegend ringförmig ausgebildet ist, auf; siehe auch Figur 4.

Die erste Festelektrolytfolie 21 ist auf ihrer aus Sicht des Sensorelements 20 nach innen weisenden Großfläche, in Figur 1 oben, ferner mit Isolationsschichten 330 und einem Dichtrahmen 331, sowie einer Folienbinderschicht 333 versehen, hier bedruckt.

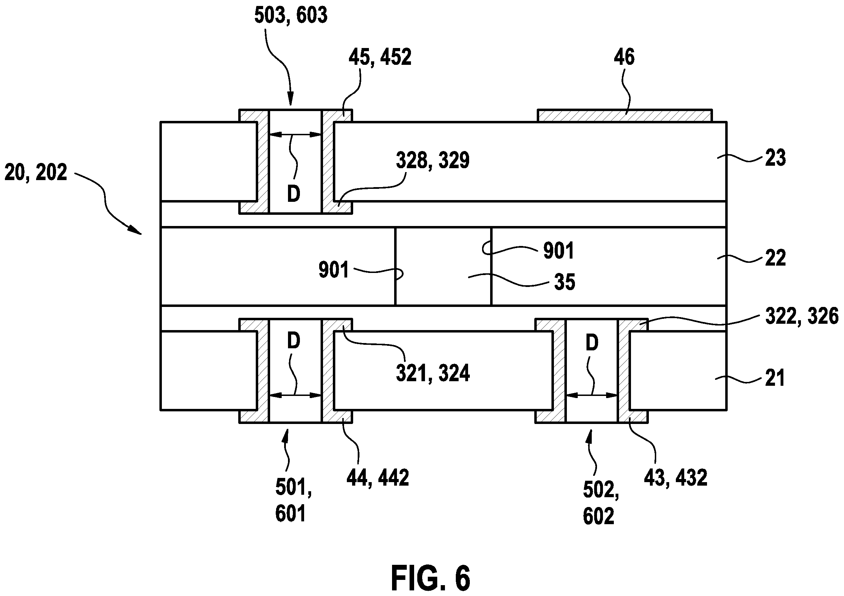

Die erste Festelektrolytfolie 21 weist im zweiten Endbereich 202 zwei Durchführungen 501, 502 auf, die in senkrechter Richtung durch die erste Festelektrolytfolie 21 verlaufen und jeweils eine Kontaktfläche 43, 44 mit einem Kragen 324, 326 einer Leiterbahn 321, 322 elektrisch leitendend verbinden; siehe Figur 6.

Die zweite Festelektrolytfolie 22 ist beidseitig mit jeweils einer Folienbinderschicht 333 versehen, ferner weist die zweite Festelektrolytfolie 22 einen Referenzgaskanal 35 auf, der sich längs von einer abgasabgewandt angeordneten Referenzgasöffnung 351 bis in den ersten Endbereich 201 des Sensorelements 20 erstreckt und dabei in Querrichtung mittig verläuft. Der Referenzgaskanal 35 ist ungefüllt ausgebildet, insbesondere sind in ihm keine porösen Füllungen vorgesehen.

Die dritte Festelektrolytfolie 23 ist auf ihrer aus Sicht des Sensorelements 20 nach innen weisenden Großfläche, in Figur 1 unten, dem Referenzgaskanal 35 gegenüberliegend, mit einer Cermetelektrode 312 als Funktionselement 31 zur Messung einer Sauerstoffkonzentration versehen. In Fortsetzung der Cermetelektrode 312 ist an deren Ende eine Leiterbahn 328 angeschlossen, wobei der Übergang von der Cermetelektrode zu der Leiterbahn 328 durch eine Abnahme der Strukturbreite gekennzeichnet ist.

Die Leiterbahn 328 weist abgasseitig einen als Zuleitung 327 bezeichneten
Abschnitt auf, der vorliegend eine konstante Breite hat. Die Leiterbahn 328 weist ferner abgasabgewandt einen als Kragen 329 bezeichneten Abschnitt, der vorliegend ringförmig ausgebildet ist, auf; siehe auch Figur 5. Auf dieser Seite der dritten Festelektrolytschicht 23 ist, zumindest wo ansonsten unbedruckt, eine Folienbinderschicht 333 vorgesehen.

Die dritte Festelektrolytfolie 23 ist auf ihrer aus Sicht des Sensorelements 20 nach außen weisenden Großfläche, in Figur 1 oben, im zweiten Endbereich 202 des Sensorelements 20 mit einer Kontaktfläche 45 und einer weiteren Kontaktfläche 46 versehen, hier bedruckt; siehe auch Figur 2.

An die weitere Kontaktfläche 46 schließt sich eine Leiterbahn 320 mit beispielsweise konstanter Breite an, die sich bis zu einer im ersten Endebereich 201 des Sensorelements 20 angeordneten weiteren Cermetelektrode 313 erstreckt. Die Leiterbahn 320 ist mit einer zum Beispiel dichten Abdeckschicht 361 bedeckt, die weitere Cermetelektrode 313 ist mit porösen Schichten 362 versehen, sodass eine Kommunikation zwischen Außenraum und weiterer Cermetelektrode 313 gewährleistet ist.

Die dritte Festelektrolytfolie 23 weist im zweiten Endereich eine Durchführung 503 auf, die die in senkrechter Richtung durch die dritte Festelektrolytfolie 23 verläuft und die die Kontaktfläche 45 mit dem Kragen 329 elektrisch leitendend verbindet; siehe Figur 6.

In der Figur 2 ist der zweite, abgasabgewandte Endbereich 202 des Sensorelements 20 in Aufsicht auf die dritte Festelektrolytfolie 23 gezeigt. Dort ist mit Blick zum ersten, abgaszugewandten Endbereich 201 des Sensorelements 20 die Kontaktfläche 45 links angeordnet.

Die Kontaktfläche 45 setzt sich zusammen aus drei Teilbereichen, nämlich einem Rumpfbereich 451, einem Kopfbereich 452 und einem Halsbereich 453. Der Rumpfbereich 451 ist auf der dem Abgas abgewandten Seite der Kontaktfläche 45 angeordnet. Er hat eine längliche Grundform, die aus einem Rechteck gleicher Länge und Breite durch maximale Abrundung der Ecken hervorgeht, also durch eine Abrundung mit einem Krümmungsradius R, der der halben Breite des Rumpfbereichs 451 bzw. der Kontaktfläche 45 entspricht. Auf diese Weise entstehen somit halbkreisförmige Endbereiche des Rumpfbereiches 451 bzw. der Kontaktfläche 45 auf der dem Abgas abgewandten Seite der Kontaktfläche 45.

Bezogen auf ein ungesintertes Sensorelement 20 (gesintert: -20%) beträgt die Länge des Rumpfbereiches 451 in diesem Beispiel 2,5mm oder mehr, die Breite des Rumpfbereichs 4511,5mm oder mehr. Der Rumpfbereich 451 ist von der linken Außenkante des Sensorelements 20 0,4mm oder weniger beabstandet und von der vorderen Außenkante des Sensorelements 20 1,3mm oder weniger beabstandet.

Der Kopfbereich 452 ist auf der dem Abgas zugewandten Seite der Kontaktfläche 45 angeordnet. Der Kopfbereich 452 ist beispielsweise ringförmig ausgebildet, mit einem Innendurchmesser von 0,5mm oder weniger und einem Außendurchmesser von 1mm oder mehr, bezogen auf ein ungesintertes Sensorelement 20 (gesintert: -20%).

Der Halsbereich 453 ist zwischen dem Rumpfbereich 451 und dem Kopfbereich 452 ausgebildet. Er bildet gegenüber dem Rumpfbereich 451 und dem Kopfbereich 452 eine Einschnürung der Kontaktfläche 45 mit einer minimalen Breite von im Beispiel 0,3mm und einer Länge von 0,3mm, bezogen auf ein ungesintertes Sensorelement 20 (gesintert: -20%).

Der Rumpfbereich 451 weist im Beispiel eine Spiegelsymmetrie bezüglich einer Achse auf, die in Längsrichtung des Sensorelements 20 weist. Der Kopfbereich 452 und der Halsbereich 453 weisen ebenfalls eine Spiegelsymmetrie auf, allerdings bezüglich einer Achse, die gegenüber der Längsachse des Sensorelements 20 um 9° bei Aufsicht auf das Sensorelement 20 im mathematisch negativen Drehsinn verdreht ist, sodass der Kopfbereich 452 und der Halsbereich 453 insgesamt leicht zur Sensormitte hin verkippt sind.

Der Kopfbereich 452 der Kontaktfläche 45 wirkt mit einer Durchführung 503 durch die dritte Festelektrolytschicht 23 elektrisch leitend zusammen.

In Figur 2 ist überdies mit Blick zum ersten, abgaszugewandte Endbereich 201 des Sensorelements 20 die weitere Kontaktfläche 46 rechts neben der Kontaktfläche 45 angeordnet. Anordnung und Größe der weiteren Kontaktfläche 46 entspricht in diesem Sinn, also unter Vertauschung von links und rechts, der Anordnung und der Größe des Rumpfbereichs 451 der Kontaktfläche 45 mit der Maßgabe, dass zwischen der Kontaktfläche 45 und der weiteren Kontaktfläche 46 ein Abstand von mindestens 0,6mm besteht, bezogen auf ein ungesintertes Sensorelement 20 (gesintert: -20%).

Die weitere Kontaktfläche 46 besteht lediglich aus einem dem Rumpfbereich 451 der Kontaktfläche 45 entsprechenden Teil, weist also weder Kopf- noch Halsbereich auf. Er wirkt auch nicht mit einer Durchführung zusammen, stattdessen ist er unmittelbar mit der Leiterbahn 328 kontaktiert, die zu der weiteren Cermetelektrode 313 führt. Eine Mittenachse der Leiterbahn 328 in Längsrichtung ist dabei bezogen auf eine
Mittenachse der weiteren Kontaktfläche 46 in Längsrichtung um 0,1mm bis 0,4mm, im Beispiel um 0,2mm, quer nach innen verschoben, bezogen auf ein ungesintertes Sensorelement 20 (gesintert: -20%).

Die Kontaktflächen 45, 46 weisen einen Edelmetallanteil von 83 Gew.-% bis 87 Gew.-%, und einen Anteil an ZrO2 und Y2O3 von zusammen 12 Gew.-% bis 16 Gew.-% auf.

In die Figur 3 ist der zweite, abgasabgewandte Endbereich 202 des Sensorelements 20 in Untersicht unter die in Figur 1 nach unten weisende erste Festelektrolytfolie 21 gezeigt. Dort ist mit Blick zum ersten, abgaszugewandte Endbereich 201 des Sensorelements 20 die Kontaktfläche 43 links angeordnet.

Die Kontaktfläche 43 setzt sich zusammen aus drei Teilbereichen, nämlich einem Rumpfbereich 431, einem Kopfbereich 432 und einem Halsbereich 433. Der Rumpfbereich 431 ist auf der dem Abgas abgewandten Seite der Kontaktfläche 43 angeordnet. Er hat eine längliche Grundform, die aus einem Rechteck gleicher Länge und Breite durch maximale Abrundung der Ecken hervorgeht, also durch eine Abrundung mit einem Krümmungsradius R, der der halben Breite des Rumpfbereichs 431 bzw. der Kontaktfläche 43 entspricht. Auf diese Weise entstehen somit halbkreisförmige Endbereiche des Rumpfbereiches 431 bzw. der Kontaktfläche 43 auf der dem Abgas abgewandten Seite der Kontaktfläche 43.

Bezogen auf ein ungesintertes Sensorelement 20 (gesintert: -20%) beträgt die Länge des Rumpfbereiches 431 in diesem Beispiel 2,5mm oder mehr, die Breite des Rumpfbereichs 4311,5mm oder mehr. Der Rumpfbereich 431 ist von der linken Außenkante des Sensorelements 20 0,4mm oder weniger beabstandet und von der vorderen Außenkante des Sensorelements 20 1,3mm oder weniger beabstandet.

Der Kopfbereich 432 ist auf der dem Abgas zugewandten Seite der Kontaktfläche 43 angeordnet. Der Kopfbereich 432 ist beispielsweise ringförmig ausgebildet, mit einem Innendurchmesser von 0,5mm oder weniger und einem Außendurchmesser von 1mm oder mehr, bezogen auf ein ungesintertes Sensorelement 20 (gesintert: -20%).

Der Halsbereich 433 ist zwischen dem Rumpfbereich 431 und dem Kopfbereich 432 ausgebildet. Er bildet gegenüber dem Rumpfbereich 431 und dem Kopfbereich 432 eine Einschnürung der Kontaktfläche 43 mit einer minimalen Breite von im Beispiel 0,9mm und einer Länge von 0,3mm, bezogen auf ein ungesintertes Sensorelement 20 (gesintert: -20%).

Der Halsbereich 433 der Kontaktfläche 43 ist wesentlich breiter, hier um einen Faktor größer 2, als der Halsbereich 451 der Kontaktfläche 45 in Figur 2. Hintergrund ist, dass über die Kontaktfläche 43 der Heizvorrichtung 311 hohe Ströme zugeführt werden, während über die Kontaktfläche 45 der Cermetelektrode 312 nur vergleichsweise geringe Ströme zugeführt werden. Die Kontaktfläche 43 ist folglich mit einem verminderten ohmschen Widerstand bzw. verbreitertem Halsbereich 433 ausgestaltet.

Der Rumpfbereich 431 weist im Beispiel eine Spiegelsymmetrie auf, bezüglich einer Achse, die in Längsrichtung des Sensorelements 20 weist. Der Kopfbereich 432 und der Halsbereich 433 weisen ebenfalls eine Spielgelsymmetrie auf, allerdings bezüglich einer Achse, die gegenüber der Längsachse des Sensorelements 20 um 9° bei Aufsicht auf das Sensorelement 20 im mathematisch negativen Drehsinn verdreht ist, sodass der Kopfbereich 432 und der Halsbereich 433 insgesamt leicht zur Sensormitte hin verkippt sind.

Der Kopfbereich 432 der Kontaktfläche 43 wirkt mit einer Durchführung 501 durch die erste Festelektrolytschicht 21 elektrisch leitend zusammen.

In Figur 3 ist überdies mit Blick zum ersten, abgaszugewandten Endbereich 201 des Sensorelements 20 die weitere Kontaktfläche 44 rechts neben der Kontaktfläche 43 angeordnet. Anordnung und Größe der weiteren Kontaktfläche 46 entsprechen in diesem Sinn, also unter Vertauschung von links und rechts und von positivem Drehsinn mit negativen Drehsinn, der Anordnung und der Größe der Kontaktfläche 43 mit der Maßgabe, dass zwischen der Kontaktfläche 43 und der weiteren Kontaktfläche 44 ein Abstand von mindestens 0,6mm besteht, bezogen auf ein ungesintertes Sensorelement 20 (gesintert: -20%).

Die Kontaktflächen 43, 44 weisen einen Edelmetallanteil von 83 Gew.-% bis 87 Gew.-%, und einen Anteil an ZrO2 und Y2O3 von zusammen 12 Gew.-% bis 16 Gew.-% auf.

In der Figur 4 ist der zweite, abgasabgewandte Endbereich 202 des Sensorelements 20 in Aufsicht auf die erste Festelektrolytfolie 21, in Figur 1 von oben, gezeigt. Dort ist mit Blick zum ersten, abgaszugewandten Endbereich 201 des Sensorelements 20 die Leiterbahn 322 rechts angeordnet. Die Leiterbahn 322 setzt sich zusammen aus zwei Teilbereichen, nämlich einer Zuleitung 325 und einem Kragen 326.

Die Zuleitung 325 bildet den abgasseitigen Teil der Leiterbahn 322 und erstreckt sich von der Heizvorrichtung 311 abgasseitig bis zu dem abgasabgewandt der Zuleitung 325 angeordneten Kragen 326. Vorliegend weist die Zuleitung 325 eine Breite B von 1,2mm auf und verläuft abgasseitig mit einer Beabstandung in Querrichtung von 0,25mm zur mittleren Längsachse des Sensorelements 20, jeweils bezogen auf ein ungesintertes Sensorelement 20 (gesintert: -20%). In einem abgasabgewandten Endbereich ist die Zuleitung 325 nach rechts, also nach außen, unter einem Winkel von 18° abgewinkelt.

Der Kragen 326 ist ringförmig ausgebildet und beschreibt vorliegend einen Bogen von 180°, dessen Außendurchmesser mit der Breite B der Zuleitung 325 identisch ist und dessen Innendurchmesser 0,4mm beträgt. Eine Breite des Kragens beträgt somit 0,3mm, jeweils bezogen auf ein ungesintertes Sensorelement 20 (gesintert: -20%). Ein Breitenverhältnis aus Kragenbreite b zu Zuleitungsbreite B beträgt 0,33.

Der elektrische Widerstand der Durchführung 501 ist dem elektrischen Widerstand der Leiterbahn 322 gleich oder etwa gleich, bezogen auf eine Temperaturverteilung, die im Betrieb des Sensors auftreten bzw. typischerweise auftreten kann. Neben einer homogenen Temperaturverteilung, zum Beispiel 20°C, ist hierbei alternativ auch auf Temperaturverteilungen abstellbar, die inhomogen sind. Beispielsweise können gleichmäßige Temperaturanstiege in Längsrichtung von 1100°C im Bereich der Heizvorrichtung 311 und 200°C, 300°C oder sogar 400°C im Bereich der Durchführung 501 zugrunde gelegt werden.

Der elektrische Widerstand der elektrischen Verbindung des Funktionselements, insbesondere der Heizvorrichtung 311 mit der Kontaktfläche 43 liegt beispielsweise im Bereich von 2,5 Ohm bei 20°C.

In Figur 4 ist überdies mit Blick zum ersten, abgaszugewandte Endbereich 201 des Sensorelements 20 die Leiterbahn 321 bezogen auf die mittlere Längsachse zu der Leiterbahn 322 symmetrisch angeordnet. Anordnung und Größe der Leiterbahn 321 entspricht in diesem Sinn, also unter Vertauschung von links und rechts, der Anordnung und der Größe der Leiterbahn 322.

Die Zuleitungen 325, 323 weisen einen Edelmetallanteil von mehr als 95 Gew.-% zum Beispiel 98 Gew.-% und mindestens 1 Gew.-% Al2O3 auf.

Der elektrische Widerstand der Durchführung 502 ist dem elektrischen Widerstand der Leiterbahn 321 gleich oder etwa gleich, bezogen auf eine Temperaturverteilung, die im Betrieb des Sensors auftreten bzw. typischerweise auftreten kann. Neben einer homogenen Temperaturverteilung, zum Beispiel 20°C, ist hierbei alternativ auch auf Temperaturverteilungen abstellbar, die inhomogen sind. Beispielsweise können gleichmäßige Temperaturanstiege in Längsrichtung von 1100°C im Bereich des Heizvorrichtung 311 und 200°C, 300°C oder sogar 400°C im Bereich der Durchführung 501 zugrunde gelegt werden

Die Figur 4a zeigt als Variante ein Sensorelement 20 mit geringfügig modifizierten Zuleitungen 323, 325, wobei die Modifikation lediglich darin besteht, dass die Breite B der Zuleitungen 323, 225 nur 1,08mm statt 1,2mm beträgt, also im Vergleich zum Kragen 324, 326 geringfügig (10%) reduziert ist. Die metrischen Maße sind bezogen auf ein ungesintertes Sensorelement 20 (gesintert -20%).

In der Figur 5 ist der zweite, abgasabgewandte Endbereich 202 des Sensorelements 20 in Untersicht unter die dritte Festelektrolytfolie 23, in Figur 3 von unten, gezeigt. Dort ist mit Blick zum ersten, abgaszugewandte Endbereich 201 des Sensorelements 20 die Leiterbahn 322 rechts angeordnet. Die Leiterbahn 322 setzt sich zusammen aus zwei Teilbereichen, nämlich einer Zuleitung 327 und einem Kragen 329.

Die Zuleitung 327 bildet den abgasseitigen Teil der Leiterbahn und erstreckt sich von der Cermetelektrode 312 abgasseitig bis zu dem abgasabgewandt der Zuleitung 327 angeordneten Kragen 329. Vorliegend weist die Zuleitung eine Breite B von 0,4mm (ungesintert; gesintert: -20%) auf und verläuft abgasseitig so, dass sie, in senkrechter Projektion in Aufsicht auf das Sensorelement 20, innerhalb des Referenzgaskanals 35 angeordnet ist. Dieser Teil der Zuleitung 327 ist während des Fertigungsprozess somit weitgehend vor Verquetschungen geschützt.

In einem abgasabgewandten Endbereich ist die Zuleitung 327 nach rechts, also nach außen, unter einem Winkel von nicht mehr als 25°, hier von 8°, abgewinkelt. In diesem abgasabgewandten Endbereich schneidet sich die Zuleitung mit der Kante des Referenzgaskanals 35 in senkrechter Projektion in Aufsicht auf das Sensorelement 20. Durch den vergleichsweise kleinen Schnittwinkel ergibt sich eine lange Überlappungszone zwischen Leiterbahn 328 und Kante des Referenzgaskanals 35 und somit wiederum ein guter Schutz vor Verquetschungen der Zuleitung 327 während des Fertigungsprozesses.

Der Kragen 329 ist ringförmig ausgebildet. Eine Breite des Kragens b beträgt 0,3mm, bezogen auf ein ungesintertes Sensorelement 20 (gesintert: -20%). Ein Breitenverhältnis aus Kragenbreite b zu Zuleitungsbreite B beträgt 0,75.

Die Zuleitung 327 weist einen Edelmetallanteil von 83 Gew.-% bis 87 Gew.-%, und einen Anteil an ZrO2 und Y2O3 von zusammen 12 Gew.-% bis 16 Gew.-% auf.

Der elektrische Widerstand der Durchführung 503 ist dem elektrischen Widerstand der Leiterbahn 328 gleich oder etwa gleich, bezogen auf eine Temperaturverteilung, die im Betrieb des Sensors auftreten bzw. typischerweise auftreten kann. Neben einer homogenen Temperaturverteilung, zum Beispiel 20°C, ist hierbei alternativ auch auf Temperaturverteilungen abstellbar, die inhomogen sind. Beispielsweise können gleichmäßige Temperaturanstiege in Längsrichtung von 750°C im Bereich der Cermetelektrode 312 und 200°C, 300°C oder sogar 400°C im Bereich der Durchführung 503 zugrunde gelegt werden.

Die Figur 5a zeigt als Variante ein Sensorelement 20 mit geringfügig modifizierter Zuleitung 328, wobei die Modifikation lediglich darin besteht, dass die Breite B der Zuleitung 328 im abgasabgewandten Endbereich gegenüber dem abgaszugewandten Bereich der Zuleitung 328 um 50% erhöht ist, von 0,4mm auf 0,6mm. Die metrischen Maße sind bezogen auf ein ungesintertes Sensorelement 20 (gesintert -20%).

Ein Schnitt durch das in den vorangehende Figuren 1 bis 5 gezeigte Sensorelement 20, in einer Ebene senkrecht zur Längsrichtung des Sensorelements 20 durch die Durchführungen 501, 502, 503 ist in der Figur 6, rein schematisch, gezeigt.

Die Durchführungen 501, 502, 503 sind als leitfähige Beschichtung der radialen Wand eines Durchkontaktierlochs 601, 602, 603 des Sensorelements 20 ausgebildet. Der Durchmesser der Durchkontaktierlöcher 601, 602, 603 beträgt im Beispiel 0,6mm, bezogen auf ein ungesintertes Sensorelement 20 (gesintert: - 20%, also 0,48mm).

Ersichtlich sind die Durchführungen 501, 502, 503 jeweils mit dem Referenzgaskanal 35 in Aufsicht auf das Sensorelement 20 überdeckungsfrei ausgeführt.

Die Durchführungen 501, 502, 503 weisen einen Edelmetallanteil von 83 Gew.-% bis 87 Gew.-%, und einen Anteil an ZrO2 und Y2O3 von zusammen 3 Gew.-% bis 8 Gew.-% und zusätzlich ein Anteil von Nb2O5 von 6 Gew.-% bis 12 Gew.-% auf.

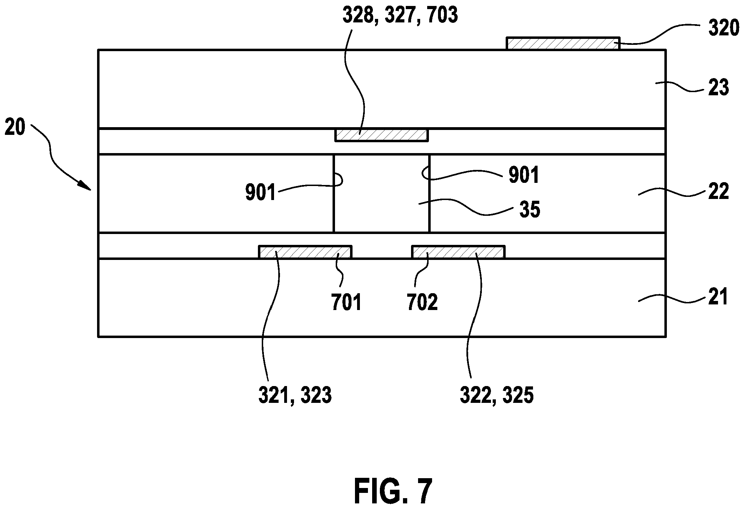

Ein Schnitt durch das in den vorangehende Figuren 1 bis 5 gezeigte Sensorelement 20, in einer Ebene senkrecht zur Längsrichtung des Sensorelements 20 etwa im Bereich der halben Längserstreckung des Sensorelements 20 ist in der Figur 7, rein schematisch, gezeigt.

Wie ersichtlich, kommt in Aufsicht auf das Sensorelement 20 die Leiterbahn 328 bzw. die Zuleitung 327, die zu der Cermetelektrode 312 führen, über ihre volle Breite mit dem Referenzkanal 35 zur Überdeckung 703. Ferner kommen die Leiterbahnen 321, 322, bzw. die Zuleitungen 323, 325, die zu dem Widerstandsheizer führen, über jeweils ca. 10% ihrer Breite mit dem Referenzkanal 35 zur Überdeckung 701, 702.

## Patentansprüche

1. Sensorelement, insbesondere zum Nachweis einer physikalischen Eigenschaft eines Gases, insbesondere zum Nachweis der Konzentration einer Gaskomponente oder der Temperatur oder eines festen Bestandteils oder eines flüssigen Bestandteils eines Abgases eines Verbrennungsmotors, wobei das Sensorelement (20) in seiner Längsrichtung einander gegenüberliegend einen ersten Endbereich (201) und einen zweiten Endbereich (202) aufweist, wobei das Sensorelement (20) in dem ersten Endbereich (201), im Inneren des Sensorelements (20) ein Funktionselement (31, 311, 312) aufweist, das mit einer im zweiten Endbereich (202) auf der Außenfläche des Sensorelements (20) angeordneten Kontaktfläche (43, 44, 45) elektrisch leitend verbunden ist, wobei die elektrisch leitende Verbindung zwischen dem Funktionselement (31, 311, 312) und der Kontaktfläche (43, 44, 45) eine im Inneren des Sensorelements (20) im wesentlichen in Längsrichtung verlaufende Leiterbahn (321, 322, 328) aufweist und eine Durchführung (501, 502, 503) aufweist, die im wesentlichen senkrecht zur Längsrichtung des Sensorelements verläuft, wobei ein elektrischer Widerstand der Leiterbahn (321, 322, 328) und ein elektrischer Widerstand der Durchführung (501, 502, 503) zueinander in einem Verhältnis stehen, das nicht größer als 3 und nicht kleiner als 1/3 ist und wobei die Durchführung (501, 502, 503) aus einer leitfähigen Beschichtung der radialen Wand eines Durchkontaktierloches (601, 602, 603) des Sensorelements (20) besteht und die Leiterbahn (321, 322, 328) eine Zuleitung (323, 325, 327) und einen Kragen (324, 326, 329) umfasst, wobei die Zuleitung (323, 325, 327) oder ein abgasabgewandter Endbereich der Zuleitung (323, 325, 327) eine konstante oder eine im wesentlichen konstante Zuleitungsbreite (B) aufweist und von dem Funktionselement (31, 311, 312) in den Bereich der Durchführung (501, 502, 503) führt, und der Kragen (324, 326, 329) in Aufsicht auf das Sensorelement (20) kreisringförmig um das Durchkontaktierloch (601, 602, 603) herum angeordnet ist, und die elektrische Verbindung zwischen Durchführung (501, 502, 503) und Zuleitung (323, 325, 327) bewirkt, wobei der Kreisring eine Kreisringbreite (b) gemessen radial in Aufsicht auf das Durchkontaktierloch (601, 602, 603) aufweist, wobei das Funktionselement (31) ein elektrischer Widerstandheizer (311) ist und wobei ein Breitenverhältnis, Kreisringbreite (b) durch Zuleitungsbreite (B) im Bereich von 0,1 bis 0,4 liegt.

2. Sensorelement, insbesondere zum Nachweis einer physikalischen Eigenschaft eines Gases, insbesondere zum Nachweis der Konzentration einer Gaskomponente oder der Temperatur oder eines festen Bestandteils oder eines flüssigen Bestandteils eines Abgases eines Verbrennungsmotors, wobei das Sensorelement (20) in seiner Längsrichtung einander gegenüberliegend einen ersten Endbereich (201) und einen zweiten Endbereich (202) aufweist, wobei das Sensorelement (20) in dem ersten Endbereich (201), im Inneren des Sensorelements (20) ein Funktionselement (31, 311, 312) aufweist, das mit einer im zweiten Endbereich (202) auf der Außenfläche des Sensorelements (20) angeordneten Kontaktfläche (43, 44, 45) elektrisch leitend verbunden ist, wobei die elektrisch leitende Verbindung zwischen dem Funktionselement (31, 311, 312) und der Kontaktfläche (43, 44, 45) eine im Inneren des Sensorelements (20) im wesentlichen in Längsrichtung verlaufende Leiterbahn (321, 322, 328) aufweist und eine Durchführung (501, 502, 503) aufweist, die im wesentlichen senkrecht zur Längsrichtung des Sensorelements verläuft, wobei ein elektrischer Widerstand der Leiterbahn (321, 322, 328) und ein elektrischer Widerstand der Durchführung (501, 502, 503) zueinander in einem Verhältnis stehen, das nicht größer als 3 und nicht kleiner als 1/3 ist und wobei die Durchführung (501, 502, 503) aus einer leitfähigen Beschichtung der radialen Wand eines Durchkontaktierloches (601, 602, 603) des Sensorelements (20) besteht und die Leiterbahn (321, 322, 328) eine Zuleitung (323, 325, 327) und einen Kragen (324, 326, 329) umfasst, wobei die Zuleitung (323, 325, 327) oder ein abgasabgewandter Endbereich der Zuleitung (323, 325, 327) eine konstante oder eine im wesentlichen konstante Zuleitungsbreite (B) aufweist und von dem Funktionselement (31, 311, 312) in den Bereich der Durchführung (501, 502, 503) führt, und der Kragen (324, 326, 329) in Aufsicht auf das Sensorelement (20) kreisringförmig um das Durchkontaktierloch (601, 602, 603) herum angeordnet ist, und die elektrische Verbindung zwischen Durchführung (501, 502, 503) und Zuleitung (323, 325, 327) bewirkt, wobei der Kreisring eine Kreisringbreite (b) gemessen radial in Aufsicht auf das Durchkontaktierloch (601, 602, 603) aufweist, wobei das Funktionselement (31) eine flächig ausgebildete Cermet- Elektrode (312) ist und wobei ein Breitenverhältnis, Kreisringbreite (b) durch Zuleitungsbreite (B) im Bereich von 0,6 bis 1,08 liegt.

3. Sensorelement nach einem der Ansprüche 1 oder 2, **dadurch gekennzeichnet, dass** der elektrische Widerstand der Leiterbahn (321, 322, 328) und der der elektrische Widerstand der Durchführung (501, 502, 503) gleich oder zumindest etwa gleich sind.

4. Sensorelement nach einem der Ansprüche 1 oder 2, **dadurch gekennzeichnet, dass** die Leiterbahn (321, 322, 328) an ihrem dem Endbereich (201) des Sensorelements (20) abgewandten Ende seitlich abgewinkelt ist, wobei die Leiterbahn (321, 322, 328) insbesondere in Querrichtung des Sensorelements (20) außermittig verläuft und in ihrem dem Endbereich (201) des Sensorelements (20) abgewandten Ende zur Außenseite abgewinkelt ist.

5. Sensorelement nach einem der Anspruch 1, **dadurch gekennzeichnet, dass** der elektrische Widerstandheizer (311) einen elektrischen Widerstand von maximal 30 Ohm bei 20°C aufweist.

6. Sensorelement nach einem der Ansprüche 1 oder 5, **dadurch gekennzeichnet, dass** ein Breitenverhältnis, Kreisringbreite (b) durch Zuleitungsbreite (B) im Bereich 0,22 bis 0,32 liegt.

7. Sensorelement nach Anspruch 1, 5 oder 6, **dadurch gekennzeichnet, dass** der Durchmesser (D) des Durchkontaktierlochs zuzüglich zweimal der Kreisringbreite (b) identisch oder etwa identisch ist mit der Zuleitungsbreite (B).

8. Sensorelement nach einem der Ansprüche 1 oder 5 bis 7 **dadurch gekennzeichnet, dass** die Zuleitungsbreite (B) im Bereich von 0,72 bis 1,12 mm liegt und die Kreisringbreite (b) im Bereich von 0,2 bis 0,28 mm beträgt und der Durchmesser (D) des Durchkontaktierlochs (601, 602, 603) im Bereich von 0,4 bis 0,56mm liegt.

9. Sensorelement nach Anspruch 2, **dadurch gekennzeichnet, dass** die Cermet-Elektrode (312) mit dem Außenraum des Sensorelements (20) kommuniziert.

10. Sensorelement nach Anspruch 2 oder 9, **dadurch gekennzeichnet, dass** ein Breitenverhältnis, Kreisringbreite (b) durch Zuleitungsbreite (B) im Bereich von 0,70 bis 0,90 liegt.

11. Sensorelement nach einem der Ansprüche 2 oder 9 bis 10 **dadurch gekennzeichnet, dass** die Zuleitungsbreite (B) im Bereich von 0,30 bis 0,6 mm liegt und die Kreisringbreite (b) im Bereich von 0,22 bis 0,36 mm beträgt und der Durchmesser (D) des Durchkontaktierlochs (601,602, 603) im Bereich von 0,4 bis 0,56mm liegt.

12. Sensorelement nach einem der Ansprüche 1 oder 5 bis 8, dass zugleich ein Sensorelement nach einem der Ansprüche 2 oder 9 bis 11 ist, wobei die zur Heizvorrichtung (311) gehörende Durchführung (501, 502) gegenüber der zur Cermetelektrode (312) gehörende Durchführung (503) liegt, in Richtung senkrecht zur Längsrichtung der Sensorelements und senkrecht zur Querrichtung des Sensorelements.

## Claims

1. Sensor element, in particular for detecting a physical property of a gas, in particular for detecting the concentration of a gas component or the temperature or a solid constituent part or a liquid constituent part of an exhaust gas of an internal combustion engine, wherein the sensor element (20) has a first end region (201) and a second end region (202) which are situated opposite one another in its longitudinal direction, wherein the sensor element (20) has, in the first end region (201), in the interior of the sensor element (20), a functional element (31, 311, 312) which is electrically conductively connected to a contact area (43, 44, 45) which is arranged in the second end region (202) on the outer surface of the sensor element (20), wherein the electrically conductive connection between the functional element (31, 311, 312) and the contact area (43, 44, 45) has a conductor track (321, 322, 328) which runs substantially in the longitudinal direction in the interior of the sensor element (20) and has a bushing (501, 502, 503) which runs substantially perpendicularly to the longitudinal direction of the sensor element, wherein an electrical resistance of the conductor track (321, 322, 328) and an electrical resistance of the bushing (501, 502, 503) are in a ratio to one another that is not greater than 3 and not less than 1/3, and wherein the bushing (501, 502, 503) consists of a conductive coating of the radial wall of a plated through-hole (601, 602, 603) of the sensor element (20) and the conductor track (321, 322, 328) comprises a feed line (323, 325, 327) and a collar (324, 326, 329), wherein the feed line (323, 325, 327) or an end region, remote from the exhaust gas, of the feed line (323, 325, 327) has a constant or a substantially constant feed line width (B) and leads from the functional element (31, 311, 312) into the region of the bushing (501, 502, 503), and the collar (324, 326, 329) is arranged in the form of a circular ring around the plated through-hole (601, 602, 603) in a plan view of the sensor element (20) and creates the electrical connection between the bushing (501, 502, 503) and the feed line (323, 325, 327), wherein the circular ring has a circular ring width (b) measured radially in a plan view of the plated through-hole (601, 602, 603), wherein the functional element (31) is an electrical resistance heater (311), and wherein a width ratio, circular ring width (b) through feed line width (B), lies in the range of from 0.1 to 0.4.

2. Sensor element, in particular for detecting a physical property of a gas, in particular for detecting the concentration of a gas component or the temperature or a solid constituent part or a liquid constituent part of an exhaust gas of an internal combustion engine, wherein the sensor element (20) has a first end region (201) and a second end region (202) which are situated opposite one another in its longitudinal direction, wherein the sensor element (20) has, in the first end region (201), in the interior of the sensor element (20), a functional element (31, 311, 312) which is electrically conductively connected to a contact area (43, 44, 45) which is arranged in the second end region (202) on the outer surface of the sensor element (20), wherein the electrically conductive connection between the functional element (31, 311, 312) and the contact area (43, 44, 45) has a conductor track (321, 322, 328) which runs substantially in the longitudinal direction in the interior of the sensor element (20) and has a bushing (501, 502, 503) which runs substantially perpendicularly to the longitudinal direction of the sensor element, wherein an electrical resistance of the conductor track (321, 322, 328) and an electrical resistance of the bushing (501, 502, 503) are in a ratio to one another that is not greater than 3 and not less than 1/3, and wherein the bushing (501, 502, 503) consists of a conductive coating of the radial wall of a plated through-hole (601, 602, 603) of the sensor element (20) and the conductor track (321, 322, 328) comprises a feed line (323, 325, 327) and a collar (324, 326, 329), wherein the feed line (323, 325, 327) or an end region, remote from the exhaust gas, of the feed line (323, 325, 327) has a constant or a substantially constant feed line width (B) and leads from the functional element (31, 311, 312) into the region of the bushing (501, 502, 503), and the collar (324, 326, 329) is arranged in the form of a circular ring around the plated through-hole (601, 602, 603) in a plan view of the sensor element (20) and creates the electrical connection between the bushing (501, 502, 503) and the feed line (323, 325, 327), wherein the circular ring has a circular ring width (b) measured radially in a plan view of the plated through-hole (601, 602, 603), wherein the functional element (31) is a flat cermet electrode (312), and wherein a width ratio, circular ring width (b) through feed line width (B), lies in the range of from 0.6 to 1.08.

3. Sensor element according to either of Claims 1 and 2, **characterized in that** the electrical resistance of the conductor track (321, 322, 328) and the electrical resistance of the bushing (501, 502, 503) are equal or at least approximately equal.

4. Sensor element according to either of Claims 1 and 2, **characterized in that** the conductor track (321, 322, 328) is laterally angled at its end that is averted from the end region (201) of the sensor element (20), wherein the conductor track (321, 322, 328) runs eccentrically in particular in the transverse direction of the sensor element (20) and is angled away in relation to the outer side at its end that is averted from the end region (301) of the sensor element (20).

5. Sensor element according to Claim 1, **characterized in that** the electrical resistance heater (311) has an electrical resistance of at most 30 Ohm at 20°C.

6. Sensor element according to one of Claims 1 to 5, **characterized in that** a width ratio, circular ring width (b) through feed line width (B), lies in the range of from 0.22 to 0.32.

7. Sensor element according to Claim 1, 5 or 6, **characterized in that** the diameter (D) of the plated through-hole plus twice the circular ring width (b) is identical or approximately identical to the feed line width (B).

8. Sensor element according to one of Claims 1 or 5 to 7, **characterized in that** the feed line width (B) lies in the range of from 0.72 to 1.12 mm and the circular ring width (b) is in the range of from 0.2 to 0.28 mm and the diameter (D) of the plated through-hole (601, 602, 603) lies in the range of from 0.4 to 0.56 mm.

9. Sensor element according to Claim 2, **characterized in that** the cermet electrode (312) communicates with the exterior space of the sensor element (20).

10. Sensor element according to Claim 2 or 9, **characterized in that** a width ratio, circular ring width (b) through feed line width (B), lies in the range of from 0.70 to 0.90.

11. Sensor element according to one of Claims 2 or 9 to 10, **characterized in that** the feed line width (B) lies in the range of from 0.30 to 0.6 mm and the circular ring width (b) is in the range of from 0.22 to 0.36 mm, and the diameter (D) of the plated through-hole (601, 602, 603) lies in the range of from 0.4 to 0.56 mm.

12. Sensor element according to one of Claims 1 or 5 to 8, which at the same time is a sensor element according to one of Claims 2 or 9 to 11, wherein the bushing (501, 502) belonging to the heating device (311) is situated opposite the bushing (503) belonging to the cermet electrode (312), in the direction perpendicular to the longitudinal direction of the sensor element and perpendicular to the transverse direction of the sensor element.

## Revendications

1. Elément capteur, permettant en particulier de déceler une propriété physique d'un gaz, en particulier de déceler la concentration d'une composante gazeuse ou la température ou un composant solide ou un composant liquide d'un gaz d'échappement d'un moteur à combustion interne, l'élément capteur (20) présentant dans sa direction longitudinale une première zone d'extrémité (201) et une deuxième zone d'extrémité (202) à l'opposé l'une de l'autre, l'élément capteur (20) présentant dans la première zone d'extrémité (201), à l'intérieur de l'élément capteur (20), un élément fonctionnel (31, 311, 312) qui est relié de manière électriquement conductrice à une surface de contact (43, 44, 45) disposée dans la deuxième zone d'extrémité (202) sur la face extérieure de l'élément capteur (20), la liaison électriquement conductrice entre l'élément fonctionnel (31, 311, 312) et la surface de contact (43, 44, 45) présentant une piste conductive (321, 322, 328) s'étendant à l'intérieur de l'élément capteur (20) substantiellement dans la direction longitudinale et une traversée (501, 502, 503) qui s'étend de manière substantiellement perpendiculaire à la direction longitudinale de l'élément capteur, dans lequel une résistance électrique de la piste conductive (321, 322, 328) et une résistance électrique de la traversée (501, 502, 503) se trouvent dans un rapport mutuel qui n'est pas supérieur à 3 et n'est pas inférieur à 1/3, et la traversée (501, 502, 503) est composée d'un revêtement conducteur de la paroi radiale d'un trou d'interconnexion (601, 602, 603) de l'élément capteur (20) et la piste conductive (321, 322, 328) comprend une ligne d'alimentation (323, 325, 327) et un collet (324, 326, 329), dans lequel la ligne d'alimentation (323, 325, 327) ou une zone d'extrémité, détournée du gaz d'échappement, de la ligne d'alimentation (323, 325, 327) présente une largeur de ligne d'alimentation (B) constante ou substantiellement constante et mène de l'élément fonctionnel (31, 311, 312) à la zone de la traversée (501, 502, 503), et le collet (324, 326, 329), en vue de dessus sur l'élément capteur (20), est disposé en forme d'anneau de cercle autour du trou d'interconnexion (601, 602, 603) et provoque la liaison électrique entre la traversée (501, 502, 503) et la ligne d'alimentation (323, 325, 327), l'anneau de cercle présentant une largeur d'anneau de cercle (b) mesurée radialement en vue de dessus sur le trou d'interconnexion (601, 602, 603), l'élément fonctionnel (31) étant un élément chauffant à résistance électrique (311), et un rapport de largeurs, largeur d'anneau de cercle (b) sur largeur de ligne d'alimentation (B), étant compris dans la plage de 0,1 à 0,4.

2. Elément capteur, permettant en particulier de déceler une propriété physique d'un gaz, en particulier de déceler la concentration d'une composante gazeuse ou la température ou un composant solide ou un composant liquide d'un gaz d'échappement d'un moteur à combustion interne, l'élément capteur (20) présentant dans sa direction longitudinale une première zone d'extrémité (201) et une deuxième zone d'extrémité (202) à l'opposé l'une de l'autre, l'élément capteur (20) présentant dans la première zone d'extrémité (201), à l'intérieur de l'élément capteur (20), un élément fonctionnel (31, 311, 312) qui est relié de manière électriquement conductrice à une surface de contact (43, 44, 45) disposée dans la deuxième zone d'extrémité (202) sur la face extérieure de l'élément capteur (20), la liaison électriquement conductrice entre l'élément fonctionnel (31, 311, 312) et la surface de contact (43, 44, 45) présentant une piste conductive (321, 322, 328) s'étendant à l'intérieur de l'élément capteur (20) substantiellement dans la direction longitudinale et une traversée (501, 502, 503) qui s'étend de manière substantiellement perpendiculaire à la direction longitudinale de l'élément capteur, dans lequel une résistance électrique de la piste conductive (321, 322, 328) et une résistance électrique de la traversée (501, 502, 503) se trouvent dans un rapport mutuel qui n'est pas supérieur à 3 et n'est pas inférieur à 1/3, et la traversée (501, 502, 503) est composée d'un revêtement conducteur de la paroi radiale d'un trou d'interconnexion (601, 602, 603) de l'élément capteur (20) et la piste conductive (321, 322, 328) comprend une ligne d'alimentation (323, 325, 327) et un collet (324, 326, 329), dans lequel la ligne d'alimentation (323, 325, 327) ou une zone d'extrémité, détournée du gaz d'échappement, de la ligne d'alimentation (323, 325, 327) présente une largeur de ligne d'alimentation (B) constante ou substantiellement constante et mène de l'élément fonctionnel (31, 311, 312) à la zone de la traversée (501, 502, 503), et le collet (324, 326, 329), en vue de dessus sur l'élément capteur (20), est disposé en forme d'anneau de cercle autour du trou d'interconnexion (601, 602, 603) et provoque la liaison électrique entre la traversée (501, 502, 503) et la ligne d'alimentation (323, 325, 327), l'anneau de cercle présentant une largeur d'anneau de cercle (b), mesurée radialement en vue de dessus sur le trou d'interconnexion (601, 602, 603), l'élément fonctionnel (31) étant une électrode cermet (312) réalisée de forme plane, et un rapport de largeurs, largeur d'anneau de cercle (b) sur largeur de ligne d'alimentation (B), étant compris dans la plage de 0,6 à 1,08.

3. Elément capteur selon l'une quelconque des revendications 1 et 2, **caractérisé en ce que** la résistance électrique de la piste conductive (321, 322, 328) et la résistance électrique de la traversée (501, 502, 503) sont identiques ou du moins pratiquement identiques.

4. Elément capteur selon l'une quelconque des revendications 1 et 2, **caractérisé en ce que** la piste conductive (321, 322, 328) est coudée latéralement à son extrémité détournée de la zone d'extrémité (201) de l'élément capteur (20), la piste conductive (321, 322, 328) s'étendant de manière excentrée en particulier dans la direction transversale de l'élément capteur (20), et étant coudée vers la face extérieure à son extrémité détournée de la zone d'extrémité (201) de l'élément capteur (20).

5. Elément capteur selon la revendication 1, **caractérisé en ce que** l'élément chauffant à résistance électrique (311) présente une résistance électrique d'un maximum de 30 ohms à 20 °C.

6. Elément capteur selon l'une quelconque des revendications 1 ou 5, **caractérisé en ce qu'**un rapport de largeurs, largeur d'anneau de cercle (b) sur largeur de ligne d'alimentation (B), est compris dans la plage de 0,22 à 0,32.

7. Elément capteur selon la revendication 1, 5 ou 6, **caractérisé en ce que** le diamètre (D) du trou d'interconnexion plus deux fois la largeur d'anneau de cercle (b) est identique ou pratiquement identique à la largeur de ligne d'alimentation (B).

8. Elément capteur selon l'une quelconque des revendications 1 ou 5 à 7, **caractérisé en ce que** la largeur de ligne d'alimentation (B) est comprise dans la plage de 0,72 à 1,12 mm, et la largeur d'anneau de cercle (b) est comprise dans la plage de 0,2 à 0,28 mm, et le diamètre (D) du trou d'interconnexion (601, 602, 603) est compris dans la plage de 0,4 à 0,56 mm.

9. Elément capteur selon la revendication 2, **caractérisé en ce que** l'électrode cermet (312) communique avec l'espace extérieur de l'élément capteur (20) .

10. Elément capteur selon la revendication 2 ou 9, **caractérisé en ce qu'**un rapport de largeurs, largeur d'anneau de cercle (b) sur largeur de ligne d'alimentation (B), est compris dans la plage de 0,70 à 0, 90.

11. Elément capteur selon l'une quelconque des revendications 2 ou 9 à 10, **caractérisé en ce que** la largeur de ligne d'alimentation (B) est comprise dans la plage de 0,30 à 0,6 mm, et la largeur d'anneau de cercle (b) est comprise dans la plage de 0,22 à 0,36 mm, et le diamètre (D) du trou d'interconnexion (601, 602, 603) est compris dans la plage de 0,4 à 0,56 mm.

12. Elément capteur selon l'une quelconque des revendications 1 ou 5 à 8, qui est en même temps un élément capteur selon l'une quelconque des revendications 2 ou 9 à 11, la traversée (501, 502) appartenant à l'élément chauffant (311) étant située à l'opposé de la traversée (503) appartenant à l'électrode cermet (312), dans la direction perpendiculaire à la direction longitudinale de l'élément capteur et perpendiculaire à la direction transversale de l'élément capteur.
